# EUROPEAN PATENT APPLICATION

(11) **EP 4 471 892 A1**
(43) Date of publication of application: **04.12.2024**
(21) Application number: 23886347.6
(22) Date of filing: 03.11.2023
(51) Int. Cl.: H01M 4/136, H01M 4/58, H01M 4/36, H01M 4/62, H01M 10/052, H01M 4/02

(54) **CATHODE AND LITHIUM SECONDARY BATTERY MANUFACTURED USING SAME**

(30) Priority: 03.11.2022 KR 20220145389
(71) Applicant: LG Energy Solution, Ltd., Seoul 07335 (KR)
(72) Inventor: HAN, Geum Jae, Daejeon 34122 (KR); KWON, O Jong, Daejeon 34122 (KR); KIM, Kwang Jin, Daejeon 34122 (KR); KIM, Ki Woong, Daejeon 34122 (KR); AN, In Gu, Daejeon 34122 (KR); CHOI, Jung Hun, Daejeon 34122 (KR); LEE, Da Young, Daejeon 34122 (KR); SUNG, Jin Su, Daejeon 34122 (KR); PARK, Jeong Hwa, Daejeon 34122 (KR)
(74) Representative: Hoffmann Eitle
(86) International application number: PCT/KR2023/017466
(87) International publication number: WO 2024/096653

(57) **Abstract**

A positive electrode according to one embodiment of the present technology includes a positive electrode active material layer disposed on at least one surface of a positive electrode current collector, the positive electrode active material layer includes a lithium transition metal phosphate, a fluorine-based binder, and a conductive material, the lithium transition metal phosphate includes a carbon coating layer formed on a surface thereof, and a ratio (B/A) of a total weight (B) of the fluorine-based binder to a total weight (A) of carbon of the conductive material and the lithium transition metal phosphate in the positive electrode active material layer is 0.7 to 1.7.

## Description

### [Technical Field]

This application claims the benefit of priority to Korean Patent Application No. 10-2022-0145389, filed Nov. 3, 2022.

The present disclosure relates to a positive electrode and a lithium secondary battery, which have excellent adhesion and excellent resistance characteristics even with a reduced amount of binder.

### [Background Technology of the Invention]

As the technology development of and demand for electric vehicles and energy storage systems (ESSs) increase, the demand for batteries as an energy source is rapidly increasing, and accordingly, various studies on batteries capable of meeting various needs have been conducted. In particular, studies have been actively conducted on a lithium secondary battery having high energy density and excellent lifespan and cycle characteristics as a power source for such devices.

As a positive electrode active material of the lithium secondary battery, lithium cobalt oxides (LCO), lithium nickel cobalt manganese oxides (LNCMO), lithium iron phosphate (LFP), and the like have been used.

Lithium iron phosphate is inexpensive because it is abundant in resources and includes iron, which is a low-cost material. In addition, since lithium iron phosphate has low toxicity, environmental pollution can be reduced when lithium iron phosphate is used. In addition, since lithium iron phosphate has an olivine structure, an active material structure can be stably maintained at a high temperature as compared to lithium transition metal oxides having a layered structure. Accordingly, it has the advantage of excellent high-temperature stability and high-temperature lifespan characteristics of the battery.

However, lithium iron phosphate has disadvantages that a diffusion rate of lithium ions is low and electrode resistance is high as compared to lithium cobalt oxides (LCO) and lithium nickel cobalt manganese oxides (LNCMO), which have a layered or spinel structure, because the lithium ions have no choice but to move along a one-dimensional pathway due to the structural characteristics of lithium iron phosphate.

In order to improve the high electrode resistance, attempts have been made to coat a surface of lithium iron phosphate with carbon or increase a content of conductive materials, but these attempts have led to a reduction in content of the positive electrode active material, resulting in lower energy density of the battery.

As an alternative method of improving the positive electrode resistance, a method of reducing a content of a binder may be considered, but in order to manufacture a positive electrode with adhesion of a certain level or more, there is a limitation in reducing the content of the binder.

Accordingly, there is a need to develop technology that improves resistance characteristics of a lithium iron phosphate-based positive electrode without reducing positive electrode adhesion.

### [Description of the Invention]

### [Technical Problem]

The present invention aims to provide a lithium secondary battery with a reduced positive electrode resistance and improved resistance characteristics while having an adequate level of adhesion performance.

### [Technical Solution]

According to one embodiment of the present disclosure, there is provided a positive electrode including a positive electrode active material layer disposed on at least one surface of a positive electrode current collector, wherein the positive electrode active material layer includes a lithium transition metal phosphate, a fluorine-based binder, and a conductive material, wherein the lithium transition metal phosphate includes a carbon coating layer formed on a surface thereof, and a ratio (B/A) of a total weight (B) of the fluorine-based binder to a total weight (A) of carbon of the conductive material and the lithium transition metal phosphate in the positive electrode active material layer is 0.7 to 1.7.

In one embodiment of the present disclosure, the ratio (B/A) of the total weight (B) of the fluorine-based binder to the total weight (A) of carbon of the conductive material and the lithium transition metal phosphate in the positive electrode active material layer may be 0.72 to 1.3.

In one embodiment of the present disclosure, the fluorine-based binder may be included in the positive electrode active material layer in an amount of 3 wt% or less.

In one embodiment of the present disclosure, the fluorine-based binder may be included in the positive electrode active material layer in an amount of 1.6 to 2.7 wt%.

In one embodiment of the present disclosure, the positive electrode active material layer may have a porosity in a range of 25 to 30% according to Equation 1 below. Porosity (%) = {1- (measured density of positive electrode active material layer/true density of positive electrode active material)}×100.

In one embodiment of the present disclosure, the positive electrode active material layer may have a porosity in a range of 26 to 29% according to Equation 1 above.

In one embodiment of the present disclosure, the fluorine-based binder may include a first fluorine-based binder having a weight-average molecular weight (Mw) of 500,000 g/mol to 750,000 g/mol and a second fluorine-based binder having a weight-average molecular weight (Mw) of 800,000 g/mol or more.

In one embodiment of the present disclosure, the first fluorine-based binder may be a homopolymer of polyvinylidene fluoride (PVdF).

In one embodiment of the present disclosure, the second fluorine-based binder may be polyvinylidene fluoride (PVdF) including polar functional groups.

In one embodiment of the present disclosure, the second fluorine-based binder may have a weight-average molecular weight (Mw) of 900,000 g/mol to 2,000,000 g/mol.

In one embodiment of the present disclosure, a weight ratio of the first fluorine-based binder to the second fluorine-based binder may be 2:3 to 3:1.

In one embodiment of the present disclosure, in the positive electrode active material layer, a ratio (D/C) of a weight (D) of the lithium transition metal phosphate to a total weight (C) of the fluorine-based binder may be 32 to 82.

In one embodiment of the present disclosure, the lithium transition metal phosphate may be a compound represented by chemical formula 1 below,

[Chemical Formula 1] Li₁₊ₐMl₁₋ₓM2ₓ(PO_{y-b})D_{b}

Wherein, in Chemical Formula 1,
M1 may be at least one element selected from the group consisting of Fe, Mn, Co, Ni, Cu, Zn, and Mg,
M2 may be selected from any one of Groups 2 to 15 and may be one or more elements excluding element M1,
D may be at least one selected from the group consisting of F, S, and N, and
a, x, y, and b may satisfy -0.5≤a≤+0.5, 0≤x≤0.5, 3.95≤y≤4.05, and 0≤b≤1.

In one embodiment of the present disclosure, in Chemical Formula 1 above, M1 may be Fe, and M2 may be one or more selected from the group consisting of Al, Mg, Co, Mn, Ti, Ga, Cu, V, Nb, Zr, Ce, In, Zn, and Y.

In one embodiment of the present disclosure, a loading amount of the positive electrode active material layer may be in a range of 450 to 650 mg/25 cm².

In one embodiment of the present disclosure, the conductive material may be carbon nanotubes.

In one embodiment of the present disclosure, the positive electrode active material layer may further include hydrogenated nitrile-based butadiene rubber.

According to another embodiment of the present disclosure, there is provided a lithium secondary battery including the above-described positive electrode.

### [Advantageous Effects]

The positive electrode according to the present invention has the effect of improving adhesion while reducing positive electrode resistance by controlling the value of B/A, the ratio of the total weight B of the fluorine-based binder to the total weight A of carbon that contributes to the conductive performance in the positive electrode active material layer, to an optimal range.

In addition, the positive electrode according to the present invention can increase the weight ratio of lithium transition metal phosphate even with a lower binder content than a conventional positive electrode, which has the effect of improving the energy density.

### [Detailed description of exemplary embodiments]

Advantages and features of the present disclosure and methods for achieving the same will be apparent from the exemplary embodiments described below in detail with reference to the accompanying drawings. However, the present disclosure is not limited to the exemplary embodiments described below and may be implemented in various different forms. Rather, the embodiments have been provided to make the disclosure of the present disclosure thorough and complete and to fully inform those of ordinary skill in the art to which the present disclosure pertains of the scope of the present disclosure, and the present disclosure is defined only by the scope of the claims. Throughout the specification, like reference numerals denote like elements.

All terms used herein (including technical or scientific terms) should be interpreted as having the same meaning as commonly understood by one of ordinary skill in the art to which the present disclosure pertains unless otherwise defined. In addition, terms such as those defined in commonly used dictionaries are not to be interpreted in an ideal or overly formal sense unless explicitly so defined.

Terms used herein are for describing the embodiments and are not intended to limit the present disclosure. In the present specification, the singular form may include the plural form unless specifically stated. As used herein, the term(s) "comprises" and/or "comprising" do/does not preclude the presence or addition of one or more other components in addition to the stated components.

In the present specification, when a component is referred to as including a certain component, it is to be understood that the component does not exclude other components but may include other components as well, unless specifically stated otherwise.

In the present specification, reference to "A and/or B" refers to A, B, or A and B.

In the present specification, "%" refers to wt% unless clearly described otherwise.

In the present specification, D₅₀ refers to a particle diameter corresponding to a cumulative volume of 50% in the particle diameter distribution curve. D₅₀ may be measured, for example, by a laser diffraction method. The laser diffraction method generally enables measurement of a particle diameter ranging from submicrons to several mm and may obtain a result with high reproducibility and high resolution.

In the present specification, a "specific surface area" is measured by a Brunauer-Emmet-Teller (BET) method and may be specifically calculated from the amount of nitrogen gas adsorbed at a liquid nitrogen temperature (77 K) using BELSORP-mini II commercially available from BEL Japan.

In the present specification, a total weight A of carbon of a conductive material and a positive electrode active material is a total weight of a carbon material that contributes to conductive performance of a positive electrode, and is a total weight of carbon included in a positive electrode active material layer, excluding a weight of carbon included in a fluorine-based binder. Specifically, the total weight of carbon included in the positive electrode active material layer may be calculated by calculating a total amount of CO₂ produced by burning the positive electrode active material layer using a CS analyzer after separating the positive electrode active material layer from a positive electrode current collector. The weight of carbon included in the fluorine-based binder is calculated from a content of fluorine obtained by capturing gases produced by burning the positive electrode active material layer in a burning tube, in an absorption liquid, diluting the captured absorption liquid, and then measuring the content of fluorine using ion chromatography, and a fluorine-based binder composition.

In the present specification, a "weight-average molecular weight (Mw)" refers to a conversion value with respect to standard polystyrene measured through gel permeation chromatography (GPC). Specifically, the weight-average molecular weight is a value obtained by converting a value measured under the following conditions using GPC, and standard polystyrene of an Agilent system is used to make a calibration curve.

### < Measurement conditions >

Measurement instrument: Agilent GPC (Agilent 1200 series, USA)
Column: connected two PL Mixed B
Column temperature: 40 °C
Eluent: tetrahydrofuran
Flow rate: 1.0 mL/min
Concentration: ~1 mg/mL (100 µL injection)

In the present specification, positive electrode adhesion may be measured as follows. A positive electrode cut into a size having a length of 150 mm and a width of 20 mm is prepared and attached in a lengthwise direction to a slide glass having a length of 75 mm and a width of 25 mm using a double-sided tape so that a positive electrode active material layer faces the slide glass. That is, the slide glass is attached to a region corresponding to half of the lengthwise direction of the positive electrode. Thereafter, rubbing is performed 10 times using a roller so that the double-sided tape is uniformly attached, thereby preparing an evaluation sample. Next, the slide glass part of the evaluation sample is fixed to a sample stage of a universal testing machine (UTM; LS5, AMETEK), and the half of the positive electrode to which the slide glass is not attached is connected to a load cell of the UTM. A load applied to the load cell is measured while moving the load cell up to 50 mm with a force at an angle of 90° and a speed of 100 mm/min. In this case, an average value of the load measured in a section of 20 mm to 40 mm during a driving section is obtained. This process is repeated a total of 5 times, and the average value is evaluated as positive electrode adhesion (gf/20 mm) of each sample.

Hereinafter, the present disclosure will be described in detail.

### Positive electrode

A positive electrode according to one embodiment of the present disclosure includes a positive electrode active material layer positioned on at least one surface of a positive electrode current collector, wherein the positive electrode active material layer may include a lithium transition metal phosphate, a fluorine-based binder, and a conductive material, wherein the lithium transition metal phosphate may include a carbon coating layer formed on a surface thereof, and in the positive electrode active material layer, a ratio (B/A) of a total weight B of the fluorine-based binder to a total weight A of carbon of the conductive material and the lithium transition metal phosphate may range from 0.7 to 1.7.

The inventors of the present disclosure have repeatedly performed studies on improving resistance characteristics of a positive electrode including a lithium transition metal phosphate-based positive electrode active material without reducing adhesion, and found that when a ratio (B/A) of a total weight B of a fluorine-based binder to a total weight A of carbon, which contributes to conductive performance in a positive electrode active material layer, of a conductive material and a positive electrode active material satisfies 0.7 to 1.7, positive electrode resistance is reduced while appropriate adhesion performance is still exhibited even when the total content of the fluorine-based binder included in the positive electrode active material layer is reduced, which led them to the present disclosure.

By controlling a B/A value, which is a value of a ratio of the total weight B of the fluorine-based binder to the total weight A of carbon contributing to the conductive performance, to an optimum range, the positive electrode according to one embodiment of the present disclosure has an appropriate level of adhesion performance even with a binder content less than that of a binder included in a conventional positive electrode. In addition, since the binder content included in the positive electrode active material layer is reduced to improve resistance characteristics, and the weight ratio of the positive electrode active material can be increased by the reduced content of the binder, energy density per weight of the positive electrode can be increased. Since the B/A value is a parameter that controls not only the electrical performance of the electrode, such as conductivity, but also the physical performance of the electrode, such as adhesion, it is possible to manufacture an electrically and physically balanced positive electrode by properly controlling and limiting the B/A value, an effect that cannot be achieved by controlling electrical and physical performance separately.

The positive electrode according to the present disclosure will now be described in detail.

The positive electrode according to one embodiment of the present disclosure may include a positive electrode active material layer. Specifically, the positive electrode according to the present disclosure may include a positive electrode current collector and the positive electrode active material layer positioned on at least one surface of the positive electrode current collector.

The positive electrode current collector is not particularly limited as long as it does not cause a chemical change in the battery and has conductivity. For example, stainless steel, aluminum, nickel, titanium, sintered carbon, or aluminum or stainless steel whose surface has been treated with carbon, nickel, titanium, silver, or the like may be used as the current collector.

The positive electrode current collector may have a thickness of 3 µm to 500 µm and may have fine irregularities formed on a surface thereof to increase adhesion to the positive electrode active material layer. For example, the positive electrode current collector may be used in various forms such as a film, a sheet, a foil, a net, a porous body, a foamed body, a non-woven fabric, and the like.

The positive electrode active material layer may include a positive electrode active material. Additionally, the positive electrode active material layer may further include a conductive material, a binder, and a dispersant as necessary, in addition to the positive electrode active material.

Hereinafter, each component included in the positive electrode active material layer will be described in detail.

### (1) Positive electrode active material

The present disclosure includes a lithium transition metal phosphate as the positive electrode active material. The lithium transition metal phosphate has an olivine structure, and thus an active material structure remains stable at a high temperature as compared to lithium transition metal oxides having a layered structure. As a result, when the lithium transition metal phosphate is used as the positive electrode active material, high-temperature stability and high-temperature lifespan characteristics of the positive electrode are remarkably improved, so that the risk of ignition of a lithium secondary battery including the positive electrode may be reduced.

The lithium transition metal phosphate may be a compound represented by Chemical Formula 1 below,

[Chemical Formula 1] Li₁₊ₐM1₁₋ₓM2ₓ(PO_{y-b})D_{b}

Wherein, in Chemical Formula 1,
M1 may be at least one element selected from the group consisting of Fe, Mn, Co, Ni, Cu, Zn, and Mg,
M2 may be selected from any one of Groups 2 to 15 and may be one or more elements excluding element M1,
D may be at least one selected from the group consisting of F, S, and N, and
a, x, y, and b may satisfy -0.5≤a≤+0.5, 0≤x≤0.5, 3.95≤y≤4.05, and 0≤b≤1.

In the lithium transition metal phosphate according to a specific embodiment of the present disclosure, M1 may be Fe, and M2 may be one or more selected from the group consisting of Al, Mg, Co, Mn, Ti, Ga, Cu, V, Nb, Zr, Ce, In, Zn, and Y. Specifically, the lithium transition metal phosphate may be lithium iron phosphate (LiFePO₄).

The lithium transition metal phosphate may be a secondary particle in which primary particles are agglomerated with each other, and may have a monolith structure composed of primary particles.

In the present disclosure, a "monolith structure" means a structure present morphologically in an independent phase in which particles are not agglomerated together. A particle structure in contrast to the monolith structure may include a structure forming a relatively large-sized particle shape (secondary particles) through physical and/or chemical agglomeration of relatively small-sized particles (primary particles).

When the lithium transition metal phosphate has a monolith structure composed of primary particles, migration of the binder can be mitigated during a drying process of a positive electrode slurry, and interfacial adhesion between the positive electrode current collector and the positive electrode active material layer can be improved.

Meanwhile, when the lithium transition metal phosphate is a secondary particle, the lithium transition metal phosphate may further include a hollow core portion inside the secondary particle. By intentionally weakening a mechanical strength by allowing hollows to form inside the secondary particle, the secondary particle may collapse and become primary particles during a rolling process, so that a springback phenomenon may be reduced.

In one embodiment, the hollow core portion may have a diameter of 4 µm to 12 µm, and preferably 5 µm to 11 µm. When the diameter of the hollow core portion satisfies the above range, the springback phenomenon does not excessively occur, and a collapse rate of the secondary particle is lowered so that processability and productivity are not reduced. In the present disclosure, the measurement of the diameter of the hollow core portion is not particularly limited, but may be performed by using, for example, a scanning electron microscope (SEM) photograph.

The lithium transition metal phosphate may include a carbon coating layer on a surface thereof. When the carbon coating layer is formed on the surface of the lithium transition metal phosphate, electrical conductivity can be improved to improve resistance characteristics of the positive electrode.

The carbon coating layer may be formed using one or more raw materials selected from the group consisting of glucose, sucrose, lactose, a starch, an oligosaccharide, a polyoligosaccharide, fructose, cellulose, a furfuryl alcohol polymer, a block copolymer of ethylene and ethylene oxide, a vinyl-based resin, a cellulose-based resin, a phenol-based resin, a pitch-based resin, and a tar-based resin. Specifically, the carbon coating layer may be formed through a process of mixing the raw materials with the lithium transition metal phosphate followed by heat treatment.

The lithium transition metal phosphate may have an average particle diameter D₅₀ of 0.8 µm to 20.0 µm, specifically 0.9 µm to 10.0 µm, and more specifically 0.9 µm to 3.0 µm. When the average particle diameter D₅₀ of the positive electrode active material satisfies the above range, mobility of lithium in the lithium transition metal phosphate is improved so that charging and discharging characteristics of a battery can be improved.

The lithium transition metal phosphate may have a BET specific surface area of 5 m²/g to 20 m²/g, specifically 7 m²/g to 18 m²/g, and more specifically 9 m²/g to 16 m²/g. When the above range is satisfied, agglomeration of the lithium transition metal phosphate may be effectively suppressed even in the positive electrode slurry composition having a relatively small amount of a dispersant.

The lithium transition metal phosphate may be included in the positive electrode active material layer in an amount of 95 wt% to 99 wt%, specifically 95.5 wt% to 98.5 wt%, and more specifically 96 wt% to 98 wt%. When the content of the lithium transition metal phosphate satisfies the above range, battery capacity of the positive electrode can be improved by ensuring sufficient energy density of the positive electrode. The energy density of a cell including the positive electrode according to the invention may be at least 300 Wh/L, more particularly from 320 to 400 Wh/L, more particularly from 330 to 400 Wh/L. Here, the energy density is the energy density of a full-cell.

### (2) Binder

The present disclosure includes a fluorine-based binder as the binder, and the fluorine-based binder provides adhesion between the positive electrode active material and the conductive material, and adhesion between the current collector and the positive electrode active material layer.

The fluorine-based binder may be a polyvinylidene fluoride (PVdF)-based polymer including vinylidene fluoride (VdF) as a monomer. Specific examples of the PVdF-based polymer may include a PVdF homopolymer, poly(vinylidene fluoride-co-hexafluoropropylene) (PVdF-HFP), poly(vinylidene fluoride-co-chlorotrifluoroethylene) (PVdF-CTFE), poly(vinylidene tetrafluoroethylene) (PVdF-TFE), poly(vinylidene trifluoroethylene) (PVdF-TrFE), and the like.

In order for the positive electrode according to the present invention to have an equivalent level of positive electrode adhesion compared to other conventional positive electrodes, while reducing electrode resistance, the content of the fluorine-based binder included in the positive electrode active material layer is controlled with respect to the conductivity of the positive electrode active material layer. Specifically, the ratio (B/A) of the total weight B of the fluorine-based binder to the total weight A of the carbons of the conductive material and the positive electrode active material that contribute to the conductive performance in the positive electrode active material layer is controlled to be between 0.7 and 1.7.

In an exemplary embodiment of the present disclosure, the B/A value may be 0.72 to 1.3, and preferably 0.8 to 1.25. When the B/A value is within the above range, it is possible to have excellent resistance characteristics while having adhesion performance without the risk of deintercalation of the positive electrode active material layer.

In one embodiment of the present disclosure, the fluorine-based binder may include a first fluorine-based binder and a second fluorine-based binder having different numerical ranges of weight-average molecular weight (Mw).

In one embodiment of the present disclosure, the first fluorine-based binder may have a weight-average molecular weight (Mw) of 500,000 g/mol to 750,000 g/mol, preferably 550,000 g/mol to 730,000 g/mol, and more preferably 580,000 g/mol to 700,000 g/mol. The first fluorine-based binder provides adhesion between the positive electrode active material and the conductive material, and adhesion between the current collector and the positive electrode active material layer.

In an exemplary embodiment of the present disclosure, the first fluorine-based binder may be a homopolymer of PVdF. Since the homopolymer of PVdF includes less polar functional groups such as -COOH, the functional group of the binder can reduce the number of hydrogen bonds between hydrogen on the carbon coating layer coated on the surface of the lithium transition metal phosphate particles, so that gelation of the positive electrode slurry is prevented, and the coating processability of the positive electrode slurry is improved. In addition, the thickness and/or surface of the coated positive electrode active material layer are uniform, so that the output performance and lifespan characteristics of the lithium secondary battery manufactured using the positive electrode are excellent.

The second fluorine-based binder may have a weight-average molecular weight (Mw) of 800,000 g/mol or more, preferably 900,000 g/mol to 2,000,000 g/mol, and more preferably 1,000,000 g/mol to 1,500,000 g/mol. The second fluorine-based binder exhibits a synergistic effect together with the first fluorine-based binder, thereby reducing the total content of the fluorine-based binder included in the positive electrode active material layer without causing a reduction in adhesion. That is, when the total wt% of the fluorine-based binder included in the positive electrode active material layer is the same, adhesion performance of the positive electrode including both the first fluorine-based binder and the second fluorine-based binder is more excellent than that of the positive electrode including only the first fluorine-based binder. Thus, when the first fluorine-based binder and the second fluorine-based binder are used in combination, even when the total wt% of the fluorine-based binder included in the positive electrode active material layer is reduced, the effect of improving resistance characteristics may be further increased due to the reduced binder content without reducing adhesion performance.

In an exemplary embodiment of the present disclosure, the second fluorine-based binder may be polyvinylidene fluoride (PVdF) including polar functional groups. When the second fluorine-based binder includes polar functional groups, the crystallinity of the second fluorine-based binder is lowered, and thus the flexibility of the positive electrode active material layer may be improved, and the improved flexibility of the positive electrode active material layer may prevent the positive electrode active material layer from deintercalating from the positive electrode current collector even when subjected to external stress, and as a result, the adhesion of the positive electrode may be improved.

In an exemplary embodiment of the present disclosure, the fluorine-based binder may be included in the positive electrode active material layer in an amount of 3 wt% or less, and preferably 1.6 to 2.7 wt%. The content of the fluorine-based binder is preferably within the above numerical range in terms of resistance characteristics of the positive electrode.

In an exemplary embodiment of the present disclosure, a weight ratio of the first fluorine-based binder to the second fluorine-based binder may be 2:3 to 3:1, and preferably 1:1 to 2:1. When the content of the first fluorine-based binder is excessively large, it may not be desirable in terms of adhesion performance, and when the content of the second fluorine-based binder is excessively large, it may not be desirable because gelation of the positive electrode slurry may be induced.

In an exemplary embodiment of the present disclosure, a ratio of a weight D of the lithium transition metal phosphate, which is a positive electrode active material, to a total weight C of the first fluorine-based binder and the second fluorine-based binder may be 32 to 82, preferably 34 to 72, and more preferably 36 to 60. When the ratio of the weight D of the lithium transition metal phosphate, which is a positive electrode active material, to the total weight C of the first fluorine-based binder and the second fluorine-based binder is within the above numerical range, both capacity characteristics and adhesion performance of the positive electrode may be maintained at an appropriate level.

### (3) Conductive material

The positive electrode active material layer of the present disclosure may further include a conductive material.

The conductive material is not particularly limited as long as it imparts conductivity without causing chemical changes in the battery, and may be, for example: graphite; carbon black such as carbon black, acetylene black, Ketjen black, channel black, furnace black, lamp black, or thermal black; conductive fibers such as carbon fibers or metal fibers; a metal powder such as fluorocarbon powder, aluminum powder, or nickel powder; conductive whiskers such as zinc oxide or potassium titanate; a conductive metal oxide such as titanium oxide; a conducting material such as a polyphenylene derivative, or the like. Specific examples of a commercially available conductive material may include acetylene black-based products (available from Chevron Chemical Company, Denka Singapore Private Limited (Denka Black), and Gulf Oil Company), Ketjen black, the EC series (available from Armak Company), Vulcan XC-72 (available from Cabot Company), Super P (available from Timcal Co., Ltd.), and the like. Preferably, the conductive material may be carbon nanotubes. When the conductive material is carbon nanotubes, an excellent conductive network of the carbon nanotubes may suppress a binder migration phenomenon in which the binder moves to the electrode surface when the electrode is dried, thereby further improving interfacial adhesion between the positive electrode current collector and the positive electrode active material layer.

The conductive material may be included in the positive electrode active material layer in an amount of 0.3 wt% to 2.0 wt%, specifically 0.4 wt% to 1.5 wt%, and more specifically 0.5 wt% to 1.3 wt%. When the content of the conductive material in the positive electrode active material layer satisfies the above range, the conductive network of the positive electrode is ensured, so that the electrical conductivity of the positive electrode may be improved.

According to one embodiment of the present disclosure, the positive electrode active material layer may include 96 to 98 wt% of the positive electrode active material, 0.8 to 1.3 wt% of the conductive material, and 1.2 to 3.0 wt% of the binder. When the composition in the positive electrode active material layer satisfies the above range, the adhesion and conductivity of the electrode are ensured, while the active material content is increased, so that the capacity and resistance performance of the lithium secondary battery including the positive electrode may be optimized.

### (4) Dispersant

The positive electrode active material layer of the present disclosure may further include a dispersant.

The dispersant suppresses the phenomenon in which the lithium transition metal phosphate is excessively agglomerated in the positive electrode slurry composition, and allows the lithium transition metal phosphate to be effectively dispersed and present in the prepared positive electrode active material layer.

The dispersant may include a hydrogenated nitrile-based copolymer, and specifically, the dispersant may be a hydrogenated nitrile-based copolymer.

Specifically, the hydrogenated nitrile-based copolymer may be a copolymer including a structural unit derived from α,β-unsaturated nitrile and a structural unit derived from a hydrogenated conjugated diene or a copolymer including a structural unit derived from α,β-unsaturated nitrile, a structural unit derived from a conjugated diene, and a structural unit derived from a hydrogenated conjugated diene. As the α,β-unsaturated nitrile monomer, for example, acrylonitrile, methacrylonitrile, and the like may be used, which may be used alone or in a mixture of two or more thereof. As the conjugated diene-based monomer, for example, a C4 to C6 conjugated diene-based monomer such as 1,3-butadiene, isoprene, 2,3-methyl butadiene, and the like may be used, which may be used alone or in a mixture of two or more thereof.

More specifically, the hydrogenated nitrile-based copolymer may be a hydrogenated nitrile-based butadiene rubber (H-NBR). Here, the hydrogenated nitrile-based butadiene rubber may have a weight-average molecular weight (Mw) of 10,000 g/mol to 100,000 g/mol, preferably 15,000 g/mol to 90,000 g/mol, and more preferably 20,000 g/mol to 50,000 g/mol. When the hydrogenated nitrile-based butadiene rubber satisfies the above numerical range, the effect of suppressing agglomeration of the conductive material is further excellent, and even when the conductive material is agglomerated, since the agglomeration is spherical rather than linear, the specific surface area of the agglomerated conductive material may be minimized as compared to a case in which the conductive material is linearly agglomerated. As a result, a surface area of the positive electrode active material, which is located adjacent to the agglomerated conductive material and does not participate in a lithium intercalation/deintercalation reaction, is minimized, and thus discharge resistance of the lithium secondary battery may be lowered.

The dispersant may be included in an amount of 0.1 wt% to 2.0 wt%, specifically 0.2 wt% to 1.8 wt%, and more specifically 0.3 wt% to 1.6 wt% based on the total solid content of the positive electrode slurry composition. When the content of the dispersant satisfies the above range, agglomeration of the positive electrode active material may be suppressed, thereby preventing gelation of the positive electrode slurry composition.

The positive electrode according to the present disclosure may be manufactured according to a typical method of manufacturing a positive electrode. Specifically, the positive electrode may be manufactured by preparing a positive electrode slurry composition including the positive electrode active material, the conductive material, the binder, and/or the dispersant, and applying the positive electrode slurry composition onto a positive electrode current collector, followed by drying and rolling.

Further, as another method, the positive electrode may be manufactured by casting the positive electrode slurry composition on a separate support and then laminating a film peeled from the support on the positive electrode current collector.

In one embodiment of the present disclosure, a loading amount of the positive electrode active material layer may be in a range of 450 to 650 mg/25 cm². The loading amount in the above range is larger than a loading amount of a general positive electrode, and thus is suitable for a high loading positive electrode.

In one embodiment of the present disclosure, a porosity of the positive electrode active material layer after rolling may be in a range of 25 to 30%, and preferably 26 to 29%. Here, the porosity may be calculated according to Equation 1 below. In Equation 1, the true density is density of only a portion completely filled with a material, except a gap between positive electrode active material particles. Porosity (%) = {1- (measured density of positive electrode active material layer/true density of positive electrode active material)}×100

When the porosity of the positive electrode active material layer satisfies the above numerical range, it is preferable in terms of the adhesion performance of the positive electrode and the capacity of the positive electrode.

The positive electrode according to one embodiment of the present disclosure may have excellent positive electrode adhesion and resistance characteristics, and as a result, a high-loading positive electrode may be manufactured and the deintercalation of the positive electrode may be prevented, and thus the cell resistance of a secondary battery may be lowered, the capacity and output characteristics of the battery can be enhanced, and defects that are generated in a manufacturing process can be reduced.

The positive electrode of the present disclosure has an adhesion between the positive electrode current collector and the positive electrode active material layer of 19 gf/20 mm or more, and specifically 20 gf/20 mm or more as measured by a 90° peel test. When the positive electrode has the adhesion of at least the above numerical value, the deintercalation of the positive electrode active material layer during the manufacturing process can be prevented.

The positive electrode of the present invention may have a DCIR of 1.91 Ω or less, more particularly 1.5 to 1.85 S2, more particularly 1.6 to 1.82 Q, or more particularly 1.7 Q or less, for a voltage drop measured at a temperature of 25°C, SOC 30% charge, and a discharge pulse of 0.5C for 10 seconds. Furthermore, the DCIR for the voltage drop measured at a temperature of 25°C, a SOC 30% charge, and a discharge pulse at 2C for 10 seconds may be 1.7 Q or less, more specifically 1.4 to 1.19 S2, more specifically 1.45 to 1.68 Q. The method of measuring the DCIR is as described in Experimental Example 3 below.

### Lithium secondary battery

Next, a lithium secondary battery according to the present disclosure will be described.

A lithium secondary battery according to one embodiment of the present disclosure may include a positive electrode, a negative electrode, a separator interposed between the positive electrode and the negative electrode, and an electrolyte.

In the lithium secondary battery, the positive electrode is the same as described above. For example, the positive electrode includes a positive electrode active material layer positioned on at least one surface of a positive electrode current collector, wherein the positive electrode active material layer may include a lithium transition metal phosphate, a fluorine-based binder, and a conductive material, and the lithium transition metal phosphate may include a carbon coating layer formed on a surface thereof, a ratio (B/A) of a total weight B of the fluorine-based binder to a total weight A of carbon of the conductive material and the lithium transition metal phosphate in the positive electrode active material layer may be 0.7 to 1.7, and preferably, the fluorine-based binder may include a first fluorine-based binder having a weight-average molecular weight (Mw) of 500,000 g/mol to 750,000 g/mol and a second fluorine-based binder having a weight-average molecular weight (Mw) of 800,000 g/mol or more.

Additionally, the positive electrode may further include a conductive material and a dispersant.

The negative electrode may be manufactured, for example, by preparing a composition for forming a negative electrode, which includes a negative electrode active material, a negative electrode binder, and a negative electrode conductive material on a negative electrode current collector, and then applying the composition onto the negative electrode current collector.

The negative electrode active material is not particularly limited, and any compound capable of reversibly intercalating and deintercalating lithium may be used. Specific examples thereof include: carbonaceous materials such as artificial graphite, natural graphite, graphitized carbon fiber, amorphous carbon, high-crystallinity carbon, and the like; metallic compounds capable of alloying with lithium, such as Si, Al, Sn, Pb, Zn, Bi, In, Mg, Ga, Cd, a Si alloy, a Sn alloy, an Al alloy, and the like; and composites including metallic compounds and carbonaceous materials. In addition, examples of low-crystallinity carbon include soft carbon and hard carbon, and examples of high-crystallinity carbon include natural graphite, Kish graphite, pyrolytic carbon, mesophase pitch-based carbon fiber, meso-carbon microbeads, mesophase pitches, and high-temperature sintered carbon such as petroleum or coal tar pitch-derived cokes, which may be used alone or in a mixture of two or more thereof. In addition, as the negative electrode active material, a lithium metal thin film may be used.

The negative electrode conductive material is used to impart conductivity to the electrode, and any conductive material that does not cause a chemical change in a battery and has conductivity may be used without particular limitation. Specific examples of the negative electrode conductive material include graphite such as natural graphite, artificial graphite, and the like; carbon-based materials such as carbon black, acetylene black, Ketjen black, channel black, furnace black, lamp black, thermal black, carbon fibers, carbon nanotubes, and the like; powders or fibers of metals such as copper, nickel, aluminum, silver, and the like; conductive whiskers such as zinc oxide, potassium titanate, and the like; conductive metal oxides such as titanium oxide and the like; and conductive polymers such as polyphenylene derivatives and the like, which may be used alone or in a mixture of two or more thereof. The negative electrode conductive material may be typically included in an amount of 1 to 30 wt%, specifically 1 to 20 wt%, and more specifically 1 to 10 wt% with respect to the total weight of a negative electrode active material layer.

The negative electrode binder serves to enhance cohesion between negative electrode active material particles and adhesion between the negative electrode active material and the negative electrode current collector. Specific examples of the negative electrode binder include polyvinylidene fluoride (PVdF), a vinylidene fluoride-hexafluoropropylene copolymer (PVdF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), a sulfonated EPDM, styrene butadiene rubber (SBR), fluoro-rubber, and various copolymers thereof, which may be used alone or in a mixture of two or more thereof. The negative electrode binder may be included in an amount of 1 wt% to 30 wt%, specifically 1 wt% to 20 wt%, and more specifically 1 wt% to 10 wt% with respect to the total weight of the negative electrode active material layer.

Meanwhile, the negative electrode current collector is not particularly limited as long as it does not cause a chemical change in a battery and has high conductivity. For example, copper, stainless steel, aluminum, nickel, titanium, sintered carbon, or copper or stainless steel whose surface has been treated with carbon, nickel, titanium, silver, or the like, an aluminum-cadmium alloy, or the like may be used as the negative electrode current collector.

In addition, the negative electrode current collector may have a thickness of 3 to 500 µm, and like the positive electrode current collector, fine irregularities may be formed on a surface of the negative electrode current collector to increase the binding force of the negative electrode active material. For example, the negative electrode current collector may be used in various forms including a film, a sheet, a foil, a net, a porous body, a foamed body, a non-woven fabric, and the like.

Meanwhile, as the separator in the lithium secondary battery, any separator that is typically used as a separator in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a typical porous non-woven fabric, for example, a non-woven fabric formed of a high melting point glass fiber or a polyethylene terephthalate fiber, may be used. In addition, the separator may be a porous thin film having a pore diameter of 0.01 µm to 10 µm and a thickness of 5 µm to 300 µm.

Meanwhile, in the lithium secondary battery, the electrolyte may include an organic solvent and a lithium salt, which are typically used in an electrolyte, and they are not particularly limited.

As the organic solvent, any solvent that may serve as a medium through which ions involved in an electrochemical reaction of a battery can migrate may be used without particular limitation. Specifically, as the organic solvent, an ester-based solvent such as methyl acetate, ethyl acetate, γ-butyrolactone, ε-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; or a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like may be used.

Among these, a carbonate-based solvent is preferably used, and a mixture of a cyclic carbonate having high ionic conductivity and a high dielectric constant, such as ethylene carbonate or propylene carbonate, which can increase the charge and discharge performance of the battery, and a linear carbonate-based compound with low viscosity (for example, ethyl methyl carbonate, dimethyl carbonate, diethyl carbonate, or the like) is more preferably used.

The lithium salt is not particularly limited as long as it is a compound capable of providing lithium ions used in a lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used as the lithium salt. The lithium salt is preferably included at a concentration of about 0.6 mol% to 2 mol% in the electrolyte.

In addition to the above-described electrolyte components, the electrolyte may further include one or more additives such as pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, and the like for the purpose of enhancing the lifetime characteristics of a battery, suppressing a decrease in battery capacity, enhancing the discharge capacity of a battery, or the like. In this case, the additives may be included in an amount of 0. 1 to 5 wt% with respect to the total weight of the electrolyte.

The lithium secondary battery according to the present disclosure may be manufactured by interposing a separator between the positive electrode and the negative electrode to form an electrode assembly, placing the electrode assembly in a cylindrical battery case or a prismatic battery case, and injecting an electrolyte. Alternatively, the lithium secondary battery may be manufactured by stacking the electrode assembly, impregnating the same with an electrolyte, placing the resultant in a battery case, and sealing the battery case.

In the manufacture of the lithium secondary battery according to the present disclosure, the electrode assembly may be dried to remove one or more organic solvents selected from the group consisting of N-methyl-2-pyrrolidone (NMP), acetone, ethanol, propylene carbonate, ethylmethyl carbonate, ethylene carbonate, and dimethyl carbonate, which are used in the manufacture of the positive electrode. When an electrolyte having the same components as the organic solvent used in the manufacture of the positive electrode is used as the electrolyte, the process of drying the electrode assembly may be omitted.

Unlike the above-described lithium secondary battery, a lithium secondary battery according to another embodiment of the present disclosure may be an all-solid-state battery.

As the battery case, any battery case that is typically used in the art may be used, and there is no limitation on an outer shape according to the purpose of the battery. For example, the outer shape of the battery case may be a cylindrical shape using a can, a prismatic shape, a pouch shape, a coin shape, or the like.

The lithium secondary battery according to the present disclosure is useful in the fields of portable devices such as mobile phones, laptop computers, digital cameras, and the like, energy storage systems (ESSs), and electric vehicles such as hybrid electric vehicles (HEVs) and the like due to stably exhibiting excellent discharge capacity, output characteristics, and a capacity retention rate.

Hereinafter, the present disclosure will be described in more detail with reference to examples. However, the following examples are merely presented to exemplify the present disclosure, and the scope of the present disclosure is not limited to the following examples.

### Example 1: Manufacture of positive electrode

### (1) Preparation of positive electrode slurry

LiFePO₄, which is a primary particle of a monolith structure having an average particle diameter D₅₀ of 1.0 µm, as a lithium transition metal phosphate, carbon nanotubes (CNTs) as a conductive material, polyvinylidene fluoride (PVdF), which has a weight-average molecular weight (Mw) of 670,000 g/mol and is a homopolymer, as a first fluorine-based binder, and polyvinylidene fluoride (PVdF), which has a weight-average molecular weight (Mw) of 1,000,000 g/mol and includes polar functional groups, as a second fluorine-based binder were added to an N-methylpyrrolidone (NMP) solvent. Mixing was performed at 2500 rpm for 90 minutes using a homo-disperser to prepare a positive electrode slurry.

In the positive electrode slurry, the lithium transition metal phosphate, the conductive material, the first fluorine-based binder, and the second fluorine-based binder were present in a weight ratio of 96.7:0.8: 1.25: 1.25, and a solid content of the positive electrode slurry was 62 wt%.

### (2) Manufacture of positive electrode

The positive electrode slurry was applied onto a 20 µm-thick aluminum thin film to be 600 mg/25 cm² and then hot air dried at 130 °C for 5 minutes so that the positive electrode slurry had a solid content of 99.0 wt% or more. Thereafter, the dried positive electrode slurry was rolled so that a positive electrode active material layer had a porosity of 27% to manufacture a positive electrode.

In this case, the porosity was measured by a method according to Equation 1 below. Porosity (%) = {1- (measured density of positive electrode active material layer/true density of positive electrode active material)}×100

### Examples 2 to 4: Manufacture of positive electrode

A positive electrode was manufactured in the same manner as in Example 1, except that a weight ratio of a lithium transition metal phosphate, a conductive material, a first fluorine-based binder, and a second fluorine-based binder in a positive electrode slurry was changed as shown in Table 1.

### Example 5: Manufacture of positive electrode

LiFePO₄, which is a primary particle of a monolith structure having an average particle diameter D₅₀ of 1.0 µm, as a lithium transition metal phosphate, carbon nanotubes (CNTs) as a conductive material, and polyvinylidene fluoride (PVdF), which has a weight-average molecular weight (Mw) of 670,000 g/mol and is a homopolymer, as a binder were added to an N-methylpyrrolidone (NMP) solvent. Mixing was performed at 2500 rpm for 90 minutes using a homo-disperser to prepare a positive electrode slurry.

In the positive electrode slurry, the lithium transition metal phosphate, the conductive material, and the binder were present in a weight ratio of 96.2:0.8:3, and a solid content of the positive electrode slurry was 62 wt%.

### Example 6: Manufacture of positive electrode

A positive electrode was manufactured in the same manner as in Example 5, except that a weight ratio of a lithium transition metal phosphate, a conductive material, and a binder in a positive electrode slurry was changed as shown in Table 1.

### Comparative Example 1: Manufacture of positive electrode

A positive electrode was manufactured in the same manner as in Example 1, except that a weight ratio of a lithium transition metal phosphate, a conductive material, a first fluorine-based binder, and a second fluorine-based binder in a positive electrode slurry was changed as shown in Table 1.

### Comparative Example 2: Manufacture of positive electrode

LiFePO₄, which is a primary particle of a monolith structure having an average particle diameter D₅₀ of 1.0 µm, as a lithium transition metal phosphate, carbon nanotubes (CNTs) as a conductive material, and polyvinylidene fluoride (PVdF), which has a weight-average molecular weight (Mw) of 1,000,000 g/mol and includes polar functional groups, as a binder were added to an N-methylpyrrolidone (NMP) solvent.

In the positive electrode slurry, the lithium transition metal phosphate, the conductive material, and the binder were present in a weight ratio of 96.2:0.8:3, and a solid content of the positive electrode slurry was 62 wt%.

However, since the viscosity of the positive electrode slurry was so high that it was impossible to coat the positive electrode slurry to a target loading amount (600 mg/25 cm2) on the positive electrode current collector, a positive electrode could not be manufactured.

### Comparative Example 3

A positive electrode was manufactured in the same manner as in Example 1, except that a weight ratio of a lithium transition metal phosphate, a conductive material, a first fluorine-based binder, and a second fluorine-based binder in a positive electrode slurry was changed as shown in Table 1.

### Experimental Example 1: Calculation of ratio (B/A) of total weight B of fluorine-based binder to total weight A of carbon included in conductive material and lithium transition metal phosphate, in positive electrode active material layer

In each of the positive electrodes manufactured according to Examples 1 to 6 and Comparative Examples 1 to 3, a ratio (B/A) of a total weight B of the fluorine-based binder to a total weight A of carbon in the positive electrode active material layer was calculated, and the results are shown in Table 1.

First, the total weight A of carbon of the conductive material and the positive electrode active material was calculated by subtracting the weight of carbon included in the fluorine-based binder from the total weight of carbon included in the positive electrode active material layer.

The total weight of carbon included in the positive electrode active material layer was calculated using a CS analyzer after separating the positive electrode active material layer from the current collector. Specifically, the total weight of carbon included in the positive electrode active material layer was calculated from a total amount of CO₂ generated by burning the positive electrode active material layer using a CS analyzer.

The weight of carbon included in the fluorine-based binder can be derived by measuring a weight of fluorine included in the positive electrode active material layer, converting the measured weight of fluorine into the total weight B of the fluorine-based binder included in the positive electrode active material layer, and then calculating the weight of carbon included in the fluorine-based binder using wt% of carbon in the fluorine-based binder.

A method of measuring the weight of fluorine included in the positive electrode active material layer is as follows. The positive electrode active material layer was separated from the current collector, a gas generated by burning the deintercalated positive electrode active material layer was captured in an absorption liquid, the captured absorption liquid was diluted, and then the weight of fluorine included in the positive electrode active material layer was measured using ion chromatography.

The total weight B of the fluorine-based binder included in the positive electrode active material layer calculated in the process of deriving the weight of carbon included in the fluorine-based binder was used as the total weight B of the fluorine-based binder.

The total weight B of the fluorine-based binder relative to the total weight A of carbon of the conductive material and the positive electrode active material calculated in this way is shown in Table 1.

### Experimental Example 2: Evaluation of adhesion of positive electrode

Each positive electrode manufactured in Examples 1 to 6 and Comparative Examples 1 to 3 was vacuum-dried at a temperature of 130 °C for 2 hours, and then adhesion between the positive electrode active material layer and the positive electrode current collector was measured, and the results are shown in Table 1.

Specifically, each positive electrode manufactured in Examples 1 to 6 and Comparative Examples 1 to 3 was cut to have a length of 150 mm and a width of 20 mm, and a positive electrode surface was attached in a longitudinal direction to a slide glass having a length of 75 mm and a width of 25 mm using a double-sided tape. That is, the slide glass was attached to a region corresponding to half of the longitudinal direction of the positive electrode. In addition, rubbing was performed 10 times using a roller so that the double-sided tape was uniformly attached, thereby preparing an evaluation sample.

Next, the slide glass part of the evaluation sample was fixed to the sample stage of a universal testing machine (UTM) (product name: LS5, manufacturer: LLOYD), and the half of the positive electrode to which the slide glass was not attached was connected to a load cell of the UTM. A load applied to the load cell was measured while moving the load cell up to 50 mm with a force at an angle of 90° and a speed of 100 mm/min. In this case, an average value of the load measured in the section of 20 mm to 40 mm during the driving section was obtained. This process was repeated a total of 5 times, and the average value was evaluated as positive electrode adhesion (gf/20 mm) of each sample.

### Experimental Example 3: Evaluation of resistance

### <Manufacture of secondary battery>

The negative electrode slurry was prepared by mixing and stirring synthetic graphite as the negative electrode active material, styrene-butadiene rubber (SBR) as the binder, carboxymethylcellulose (CMC) as the thickener, and carbon nanotubes (CNTs) as the conductive material in a weight ratio of 95: 3: 1: 1 in water.

After applying the negative electrode slurry to the copper thin film to the extent of 295 mg/25 cm², the negative electrode was dried so that the solids content of the negative electrode slurry was greater than 99.0 wt%, which was subsequently rolled to prepare the negative electrode.

A polyolefin separator was interposed between the negative electrode and each positive electrode according to Examples 1 to 6 and Comparative Examples 1 to 3, and an electrolyte solution was injected to manufacture a secondary battery of each of the examples and comparative examples. The electrolyte solution was prepared by adding vinylene carbonate (VC) to a non-aqueous electrolyte solvent in an amount of 2wt% with regard to the solvent, the solvent in which ethylene carbonate (EC) and ethyl methyl carbonate (EMC) were mixed in a volume ratio of 3:7, and then dissolving 1 M of LiPF₆ therein.

Each of the manufactured secondary batteries was charged at a constant current of 0.1 C and activated, and then a degassing process was performed.

### <Initial resistance measurement>

After charging each of the manufactured secondary batteries to a state of charge (SOC) of 100% at 1C, under constant current-constant voltage (CC-CV) charging conditions at 25 °C, charging was performed up to 3.7V at 0.33 C CC, followed by 0.05 C current cut-off, and discharging was performed up to 2.5V at 0.33 C under CC conditions. A direct current internal resistance (DCIR) was calculated using the following equation for a voltage drop measured while applying a discharge pulse for 10 seconds at 0.5 C after three cycles of charging and discharging, taking the above charging and discharging as one cycle, followed by charging to an SOC of 30%, and the results are shown in Table 1. In addition, the DCIR was also calculated for a voltage drop measured while applying a discharge pulse at 2.0 C for 10 seconds, and the results are shown in Table 1.

DCIR = (V0-V1)/I (where V0=voltage before pulse, V1=voltage 10s after pulse, and I=applied current)

### <Resistance increase rate after high-temperature storage>

The secondary batteries were stored for two weeks in a high temperature (60 °C) environment. Thereafter, after charging the battery to an SOC of 30% at a temperature of 25 °C, a DCIR was calculated for a voltage drop measured while applying a discharge pulse at 0.5C for 10 seconds according to the above equation. A resistance increase rate (%) after high-temperature storage calculated by substituting the same into the following Equation 1 below is shown in Table 1. resistance increase rate (%) = {(resistance after high-temperature storage-initial resistance)/initial resistance}×100

**[Table 1]**

| | Positive electrode composition (parts by weight) | | | | B/A | Adhesi on (gf/ 20mm) | Initial DCIR(Ω) | | Resistance increase rate (%) after high-temperatur e storage (%) |
|---|---|---|---|---|---|---|---|---|---|
| | LiFePO₄ | CN T | First fluorine -based binder | Second fluorine -based binder | | | 0.5C | 2C | |
| Example 1 | 96.7 | 0.8 | 1.25 | 1.25 | 1.19 | 27.4 | 1.7049 | 1.5759 | 20 |
| Example 2 | 97.2 | 0.8 | 1.0 | 1.0 | 0.95 | 20.1 | 1.6896 | 1.4828 | 14.5 |
| Example 3 | 96.2 | 0.8 | 1.5 | 1.5 | 1.43 | 37.8 | 1.8008 | 1.6412 | 33 |
| Example 4 | 96.2 | 0.8 | 2.0 | 1.0 | 1.43 | 35.5 | 1.7892 | 1.6215 | 33.2 |
| Example 5 | 96.2 | 0.8 | 3.0 | 0 | 1.43 | 27.7 | 1.8213 | 1.6771 | 34.2 |
| Example 6 | 97.2 | 0.8 | 2.0 | 0 | 0.95 | 16.5 | 1.6845 | 1.4789 | 17.2 |
| Comparati ve Example 1 | 98.2 | 0.8 | 0.5 | 0.5 | 0.48 | 6 | 1.9131 | 1.7120 | 41.5 |
| Comparati ve Example 2 | 96.2 | 0.8 | 0 | 3.0 | Unmeasurable | | | | |
| Comparati ve Example 3 | 95.6 | 0.8 | 1.8 | 1.8 | 1.71 | 49.2 | 1.9236 | 1.7321 | 43.1 |

The positive electrode according to any of Examples 1 through 6 showed excellent adhesion, but also showed excellent resistivity characteristics compared to the electrodes according to the comparative examples, as the value of B/A is within the range of 0.7 to 1.7. The positive electrode according to Comparative Example 1, where the value of B/A is outside the range of 0.7 to 1.7, was shown to have lower adhesion due to the lower content of binder. Furthermore, the positive electrode according to Comparative Example 1, despite having the smallest total content of binder, was shown to have a larger initial DCIR and a larger rate of increase in high temperature resistance compared to the positive electrodes of Examples 1 to 6. This is interpreted to mean that the adhesion between the positive electrode current collector and the positive electrode active material layer is too small, resulting in an increase in interfacial resistance, and the rate of resistance increase is significantly increased due to electrode deintercalation under high temperature storage conditions. In addition, the positive electrode according to Comparative Example 3 had an excellent adhesion, but its resistance characteristics were found to be inferior as the value of B/A exceeded 1.7.

In addition, the positive electrodes of Examples 1 to 2 in which the B/A value is within a range of 0.72 to 1.3 showed a smaller initial DCIR and a smaller resistance increase rate in high-temperature resistance as compared to the positive electrodes of Examples 3 to 5. Therefore, it can be seen that the B/A value within the range of 0.72 to 1.3 is preferred for improving the resistance characteristics of the positive electrode.

### Example 7: Manufacture of positive electrode

A positive electrode was prepared in the same manner as in Example 1, except that a positive electrode slurry having the same composition prepared in Example 1 was prepared to manufacture a positive electrode, and the porosity of the positive electrode active material layer was changed to 26% during rolling.

### Example 8: Manufacture of positive electrode

A positive electrode was prepared in the same manner as in Example 1, except that a positive electrode slurry having the same composition prepared in Example 1 was prepared to manufacture a positive electrode, and the porosity of the positive electrode active material layer was changed to 28% during rolling.

### Example 9: Manufacture of positive electrode

A positive electrode was prepared in the same manner as in Example 1, except that a positive electrode slurry having the same composition prepared in Example 1 was prepared to manufacture a positive electrode, and the porosity of the positive electrode active material layer was changed to 30% during rolling.

### Comparative Example 4: Manufacture of positive electrode

A positive electrode was prepared in the same manner as in Example 1, except that a positive electrode slurry having the same composition prepared in Example 1 was prepared to manufacture a positive electrode, and the porosity of the positive electrode active material layer was changed to 24% during rolling.

### Comparative Example 5: Manufacture of positive electrode

A positive electrode was prepared in the same manner as in Example 1, except that a positive electrode slurry having the same composition prepared in Example 1 was prepared to manufacture a positive electrode, and the porosity of the positive electrode active material layer was changed to 32% during rolling.

### Experimental Example 4: Evaluation of adhesion

For each positive electrode of Examples 7 to 9 and Comparative Examples 4 and 5, adhesion was measured in the same manner as in Experimental Example 2, and the results are shown in Table 2.

### Experimental Example 5: Evaluation of capacity

### <Manufacture of secondary battery>

A lithium metal counter electrode was prepared as a negative electrode.

A polyolefin separator was interposed between the negative electrode and each positive electrode according to Examples 7 to 9 and Comparative Examples 4 and 5, and an electrolyte solution was injected to manufacture a secondary battery of each of the examples and comparative examples. The electrolyte solution was prepared by adding vinylene carbonate (VC) to a non-aqueous electrolyte solvent in an amount of 0.5 wt% based on the solvent, the solvent in which ethylene carbonate (EC) and ethyl methyl carbonate (EMC) were mixed in a volume ratio of 2:8, and then dissolving 1 M of LiPF₆ therein.

Each of the manufactured secondary batteries was charged at a constant current of 0.1 C and activated, and then a degassing process was performed. Thereafter, the capacity was measured by performing initial charging and discharging under the following conditions for each battery, and the results are shown in Table 2.
Charge: 0.1C, CC/CV (3.7 V, 0.05C cut-off)
Discharge: 0.1C, CC, 2.5 V, cut-off

**[Table 2]**

| | Adhesion (gf/20mm) | Charge capacity (mAh/g) |
|---|---|---|
| Example 7 | 25.1 | 159.0 |
| Example 8 | 33.4 | 158.0 |
| Example 9 | 41.9 | 157.2 |
| Comparative Example 4 | 19.1 | 160.9 |
| Comparative Example 5 | 32.9 | 156.8 |

Referring to Table 2, the positive electrode of Comparative Example 4 having a porosity of less than 25% showed the best capacity characteristics, but had an adhesion of less than 20 gf/20 mm, which is evaluated as the risk of deintercalation of the positive electrode active material layer. The positive electrode of Comparative Example 5 having a porosity of more than 30% showed the best adhesion, but had a capacity of less than 157 mAh/g, which is evaluated as being unsuitable for a complete product. Accordingly, in the positive electrode according to the present disclosure, the porosity of the positive electrode active material layer is preferably in a range of 25 to 30%.

## Claims

1. A positive electrode comprising a positive electrode active material layer disposed on at least one surface of a positive electrode current collector,
wherein the positive electrode active material layer includes a lithium transition metal phosphate, a fluorine-based binder, and a conductive material,
the lithium transition metal phosphate includes a carbon coating layer formed on a surface thereof, and
a ratio (B/A) of a total weight (B) of the fluorine-based binder to a total weight (A) of carbon of the conductive material and the lithium transition metal phosphate in the positive electrode active material layer is 0.7 to 1.7.

2. The positive electrode of claim 1, wherein the ratio (B/A) of the total weight (B) of the fluorine-based binder to the total weight (A) of carbon of the conductive material and the lithium transition metal phosphate in the positive electrode active material layer is 0.72 to 1.3.

3. The positive electrode of claim 1, wherein the fluorine-based binder is included in the positive electrode active material layer in an amount of 3 wt% or less.

4. The positive electrode of claim 1, wherein the fluorine-based binder is included in the positive electrode active material layer in an amount of 1.6 to 2.7 wt%.

5. The positive electrode of claim 1, wherein the positive electrode active material layer has a porosity in a range of 25 to 30% according to Equation 1 below. Porosity (%) = {1- (measured density of positive electrode active material layer/true density of positive electrode active material)}×100.

6. The positive electrode of claim 5, wherein the positive electrode active material layer has a porosity in a range of 26 to 29% according to Equation 1 above.

7. The positive electrode of claim 1, wherein the fluorine-based binder includes a first fluorine-based binder having a weight-average molecular weight (Mw) of 500,000 g/mol to 750,000 g/mol and a second fluorine-based binder having a weight-average molecular weight (Mw) of 800,000 g/mol or more.

8. The positive electrode of claim 7, wherein the first fluorine-based binder is a homopolymer of polyvinylidene fluoride (PVdF).

9. The positive electrode of claim 7, wherein the second fluorine-based binder is polyvinylidene fluoride (PVdF) including polar functional groups.

10. The positive electrode of claim 7, wherein the second fluorine-based binder has a weight-average molecular weight (Mw) of 900,000 g/mol to 2,000,000 g/mol.

11. The positive electrode of claim 7, wherein a weight ratio of the first fluorine-based binder to the second fluorine-based binder is 2:3 to 3:1.

12. The positive electrode of claim 1, wherein, in the positive electrode active material layer, a ratio (D/C) of a weight (D) of the lithium transition metal phosphate to a total weight (C) of the fluorine-based binder is 32 to 82.

13. The positive electrode of claim 1, wherein the lithium transition metal phosphate is represented by Chemical Formula 1 below.
[Chemical Formula 1] Li₁₊ₐMl₁₋ₓM2ₓ(PO_{y-b})D_{b}
Wherein, in Chemical Formula 1,
M1 is at least one element selected from the group consisting of Fe, Mn, Co, Ni, Cu, Zn, and Mg,
M2 is selected from any one of Groups 2 to 15 and is one or more elements excluding element M1,
D is at least one selected from the group consisting of F, S, and N, and
a, x, y, and b satisfy -0.5≤a≤+0.5, 0≤x≤0.5, 3.95≤y≤4.05, and 0≤b≤1.

14. The positive electrode of claim 13, wherein in Chemical Formula 1 above,
M1 is Fe, and
M2 is one or more selected from the group consisting of Al, Mg, Co, Mn, Ti, Ga, Cu, V, Nb, Zr, Ce, In, Zn, and Y.

15. The positive electrode of claim 1, wherein a loading amount of the positive electrode active material layer is in a range of 450 to 650 mg/25 cm².

16. The positive electrode of claim 1, wherein the conductive material is carbon nanotubes.

17. The positive electrode of claim 1, wherein the positive electrode active material layer further includes hydrogenated nitrile-based butadiene rubber.

18. A lithium secondary battery comprising the positive electrode according to any one of claims 1 to 17.
